# EUROPEAN PATENT APPLICATION

(11) **EP 2 799 989 A2**
(43) Date of publication of application: **05.11.2014**
(21) Application number: 14153640.9
(22) Date of filing: 03.02.2014
(51) Int. Cl.: G06F 9/50

(54) **Apparatus and method of parallel processing execution**

(30) Priority: 11.04.2013 KR 20130039740
(71) Applicant: Samsung Electronics Co., Ltd, Gyeonggi-do 443-742 (KR)
(72) Inventor: Song, Joon Ho, 446-712 Gyeonggi-do (KR); Kim, Do Hyung, 446-712 Gyeonggi-do (KR); Lee, Shi Hwa, 446-712 Gyeonggi-do (KR)
(74) Representative: Grünecker, Kinkeldey, Stockmair & Schwanhäusser

(57) **Abstract**

An apparatus and method of parallel processing execution that executes a job through distributing the job to a plurality of calculators, based on a calculation property of the job. The apparatus for parallel processing execution may include a plurality of calculators to calculate a job configuring a plurality of tasks of a process, and a distributor to distribute the job to a plurality of calculators based on a calculation property of the job, wherein the plurality of calculators includes a first calculator to process a job through a controlled calculation, and a second calculator to process a job through a large volume calculation.

## Description

### 1. Field

One or more embodiments of the present disclosure relate to an apparatus and method of parallel processing execution, and more particularly to an apparatus and method of processing a job through distributing the job into a plurality of calculators, based on a calculation property of the job.

### 2. Description of the Related Art

Due to advancements in a resolution to be provided by a video or a multimedia application, a performance limit has been reached in relation to a method of executing a process performed by a conventional single calculator.

Thus, in recent times, a method of partitioning a process into a plurality of calculators is being utilized.

A conventional method of partitioning a process may include a method of partitioning tasks configuring a process in a predetermined unit, and a method of partitioning data to be processed by a process.

However, the method of partitioning the tasks is limited in that only a predetermined number of tasks can be partitioned in a process and thus, the process may not be partitioned using a calculator for which the predetermined number is exceeded.

Also, the method of partitioning the data may have an issue of consuming a great amount of resources to be assigned to a plurality of calculators because the plurality of calculators for processing partitioned data is required to perform all algorithms.

Accordingly, there is a need for a method of parallel processing execution that executes a process using a plurality of calculators without an increase in consumption of resources.

### SUMMARY

In an aspect of one or more embodiments, there is provided an apparatus for parallel processing execution, the apparatus including a plurality of calculators to calculate a job for configuring a plurality of tasks of a process, and a distributor to distribute the job to the plurality of calculators, based on a calculation property of the job, wherein the plurality of calculators includes a first calculator to process a job through a controlled calculation and a second calculator to process a job through a large volume calculation.

The distributor may classify the job based on the calculation property, and map the classified job to the first calculator or the second calculator.

The distributor may distribute a job to the first calculator or the second calculator for respective calculation results of the first calculator and the second calculator to be provided to one another.

The apparatus for parallel processing execution may further include a buffer to store calculation results of the first calculator and the second calculator of which a calculation of a job is completed in advance to sync the calculation results of the first calculator and the second calculator.

The distributor may distribute a job for the first calculator and the second calculator to process the job based on a task unit when a dependency relationship is absent between the plurality of tasks.

The distributor may distribute a job for the first calculator and the second calculator to process the job based on a task group unit grouped based on a dependency relationship when the dependency relationship is present between the plurality of tasks.

The distributor may partition a job based on a data flow in a task, and distribute the partitioned jobs to the first calculator or the second calculator, to avoid generation of feedback between the partitioned jobs.

The distributor may partition a job based on a data flow in at least one of the first calculator and the second calculator, and may distribute the partitioned job to the first calculator or the second calculator, to avoid generation of feedback of the calculations of the first calculator or the calculations of the second calculator.

The controlled calculation may include controlling of a hardware device, a branch, and a data address for executing a predetermined image processing application; the large volume calculation may include a plurality of mathematical operations; and the predetermined image processing application may include a dependency relationship in a block unit of a predetermined size.

In accordance with an aspect of one or more embodiments, there is provided a method of parallel processing execution, the method including distributing a job to a plurality of calculators, based on a calculation property of the job configuring a plurality of tasks, and calculating, by the plurality of calculators, the distributed job, wherein the plurality of calculators includes a first calculator to process a job through a controlled calculation, and a second calculator to process a job through a large volume calculation.

In an aspect of one or more embodiments, there is provided an apparatus for parallel processing execution, the apparatus including a plurality of calculators, using at least one processor, to calculate jobs for configuring a plurality of tasks of a process; and a distributor to distribute jobs to the plurality of calculators, based on a calculation property of each job, wherein the plurality of calculators includes a first calculator to process jobs distributed to the first calculator through a controlled calculation and a second calculator to process jobs distributed to the second calculator through a large volume calculation, and wherein each job is distributed to the first calculator or to the second calculator.

The process may include a video decoding process, and the distributor configures a prediction task, a transform task, and a loop filter task for the video decoder process.

For the prediction task, the distributor distributes a mode determination job and a motion vector prediction job to the first calculator and distributes a sub-pel interpolation job to the second calculator.

For the transform task, the distributor distributes a quantization parameter generation job and a transform mode control job to the first calculator and distributes an inverse quantization job and an inverse transform job to the second calculator.

For the loop filter task, the distributor distributes a filter mode determination job and a control parameter generation job to the first calculator and distributes an add/average job and a loop filtering job to the second calculator.

In an aspect of one or more embodiments, there is provided a method of parallel processing execution, the method including distributing jobs to a plurality of calculators, based on a calculation property of each job configuring a plurality of tasks of a process; and calculating, using the plurality of calculators, the distributed job, wherein the plurality of calculators includes a first calculator to process jobs distributed to the first calculator through a controlled calculation, and a second calculator to process jobs distributed to the second calculator through a large volume calculation.

According to an aspect of one or more embodiments, there is provided at least one computer readable medium storing computer readable instructions to implement methods of one or more embodiments.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates a structure of an apparatus for parallel processing execution according to example embodiments;
FIG. 2 illustrates an example of tasks into which a job is classified according to example embodiments;
FIG. 3 illustrates an example of a process in which a plurality of calculators calculates a job based on a task unit according to example embodiments;
FIG. 4 illustrates an example of distributing a job in which a distributor configures a task of a video decoder according to example embodiments;
FIG. 5 illustrates an example of a process in which a plurality of calculators calculates a job based on a task group unit according to example embodiments;
FIG. 6 illustrates an example of a process in which a plurality of calculators calculates a job using a buffer according to example embodiments;
FIG. 7 illustrates an example of a process in which a plurality of calculators calculates a job through receiving external data according to example embodiments;
FIG. 8 illustrates an example of a process in which a plurality of calculators calculates a job based on a block or pixel unit of an image according to example embodiments;
FIG. 9 illustrates an example of an apparatus for parallel processing execution according to example embodiments; and
FIG. 10 illustrates a method of parallel processing execution according to example embodiments.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

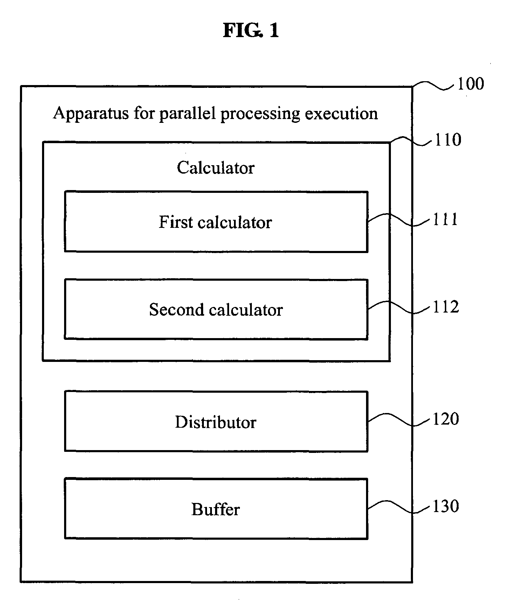

FIG. 1 illustrates a structure of an apparatus 100 for parallel processing execution according to example embodiments.

Referring to FIG. 1, the apparatus 100 for parallel processing execution may include a plurality of calculators 110, a distributor 120, and a buffer 130.

The plurality of calculators 110 may calculate a job configuring a plurality of tasks of a process.

In this instance, the plurality of calculators 110 may include a first calculator 111 to process a job through a controlled calculation, and a second calculator 112 to process a job through a large volume calculation. For example, the first calculator 111 may refer to a reduced instruction set computing (RISC) Processor, and the second calculator 112 may refer to single instruction multiple data (SIMD) or multiple instruction, multiple data (MIMD).

Here, the plurality of calculators 110 may include the plurality of first calculators 111 and the plurality of second calculators 112. For example, when a process includes a great number of jobs having a large volume calculation property, the apparatus 100 for parallel processing execution may include the plurality of second calculators 112.

Also, when a calculation property of a job is not one of the controlled calculation or the large volume calculation, the plurality of calculators 110 may further include an additional calculator corresponding to a calculation property of a job.

Also, the first calculator 111 and the second calculator 112 may provide respective calculation results to one another. For example, the first calculator 111 may provide the calculation result to the second calculator 112 or the buffer 130, and calculate jobs of a subsequent task using the calculation result provided from the second calculator 112 or a calculation result stored in the buffer 130. The second calculator 112 may provide the calculation result to the first calculator 111 or the buffer 130, and calculate jobs of a subsequent task using the calculation result provided by the first calculator 111 or the calculation result stored in the buffer 130.

The distributor 120 may distribute a job to the plurality of calculators 110, based on a calculation property of the job.

Here, the distributor 120 may classify a job based on a calculation property, and map the classified job to the first calculator 111 or the second calculator 112. More particularly, the distributor 120 may classify the job based on whether the calculation property is the controlled calculation or the large volume calculation. In this instance, the controlled calculation may refer to a calculation property including scheduling, or controlling of a hardware device, a branch, and a data address for executing a predetermined application. The large volume calculation may refer to a calculation property for performing a plurality of mathematical operations, such as a fast fourier transform (FFT).

Also, when a dependency relationship is absent among a plurality of tasks, the distributor 120 may partition the job for the first calculator 111 and the second calculator 112 to calculate based on a task unit.

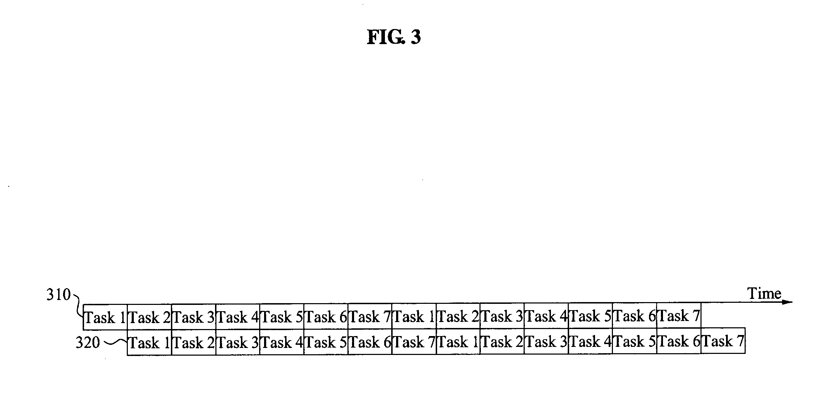

A process in which the plurality of calculators 110 calculates a job based on the task unit will be described in detail with reference to FIG. 3.

When the dependency relationship is present among the plurality of tasks, the distributor 120 may partition the job for the first calculator 111 and the second calculator 112 to calculate the job based on a task group unit to be grouped based on the dependency relationship.

When the dependency relationship is present among the plurality of tasks, and the calculation result of the second calculator 112 using the calculation result of the first calculator 111 is fedback to the first calculator 111, the first calculator 111 and the second calculator 112 may not calculate the job in parallel.

Accordingly, when the dependency relationship is present among the plurality of tasks, the distributor 120 may group the plurality of tasks based on the dependency relationship, and distribute the job for the plurality of calculators 110 to calculate the job based on the grouped task group unit.

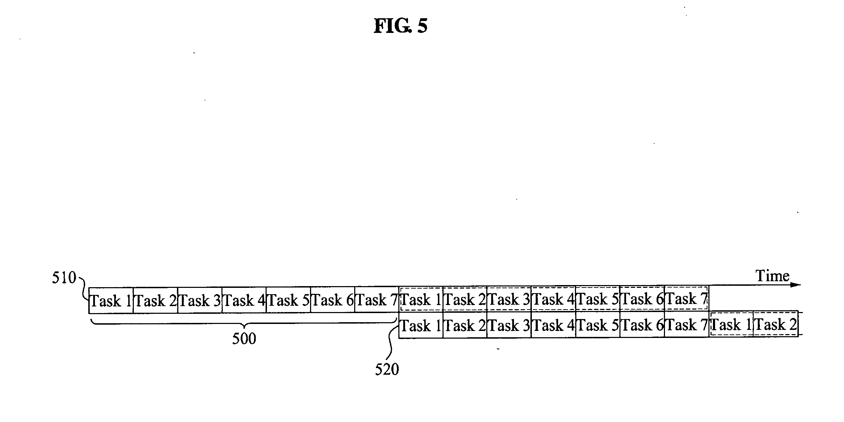

A process in which the plurality of calculators 110 calculates the job based on the task group unit will be described in detail with reference to FIG. 5.

Also, an image processing application including a video application may include a dependency relationship in a block or pixel unit of a predetermined size. Here, the distributor 120 may distribute the job for the first calculator 111 and the second calculator 112 to calculate the job based on the block or pixel unit of an image.

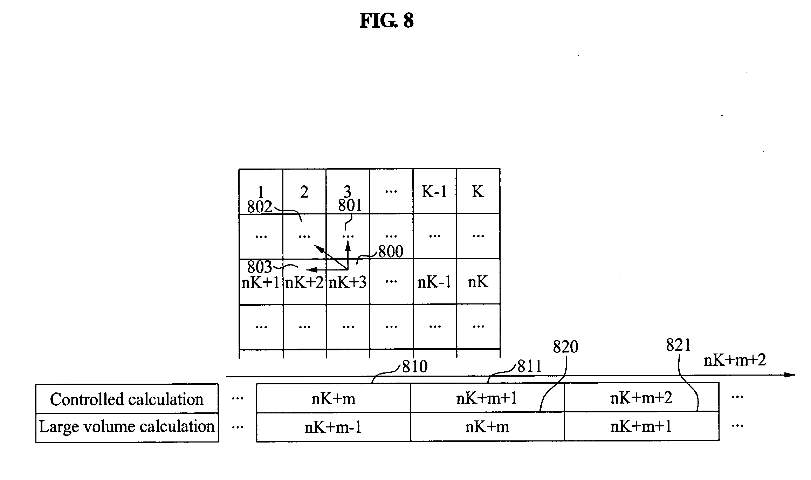

A process in which the plurality of calculators 110 calculates a job based on the block or pixel unit of the image will be described in detail with reference to FIG. 8.

The distributor 120 may partition a job into a plurality of jobs based on a data flow. Here, the distributor 120 may partition the job, such that, a feedback of a calculation result may not occur among jobs distributed to the first calculator 111, and a feedback of a calculation result may not occur among jobs distributed to the second calculator 112.

Subsequently, the distributor 120 may set a hierarchy of the partitioned job. In this instance, the hierarchy may represent a dependency relationship of the calculator 110 for calculating the partitioned job. For example, when a job distributed to the second calculator 112 uses a calculation result of a job distributed to the first calculator 111, the first calculator 111 may be a master, and the second calculator 112 may be a slave of the first calculator 111. Here, the second calculator 112 may use a slave calculator of the second calculator 112, as required, for calculating jobs distributed to the second calculator 112. For example, the apparatus 100 for parallel processing execution may further include a third calculator, and may set the third calculator as the slave calculator of the second calculator 112. When an acceleration of an additional calculation is required, the third calculator may perform a subsequent calculation, using a result of the result of the second calculator 112. For example, the third calculator may refer to a hardware accelerator, for example, a co-processor.

The distributor 120 may distribute a job to the first calculator 111 or the second calculator 112, such that the first calculator 111 and the second calculator 112 may provide respective calculation results to one another. More particularly, the distributor 120 may create a transmission channel between the first calculator 111 and the second calculator 112, such that the first calculator 111 and the second calculator 112 may provide the respective calculation results to one another.

The distributor 120 may execute a job, in parallel in a form of a pipeline, distributed to the first calculator 111 and the second calculator 112.

A period of time during which the plurality of calculators 110 performs a calculation of a job configuring a task may differ based on a task property, a number of jobs distributed to the plurality of calculators 110, and an amount of calculation required for the job.

For example, the second calculator 112 may perform a calculation of another task at a point in time at which the first calculator 111 completes a calculation of a predetermined task. Here, a synchronization overhead may occur when the first calculator waits for the second calculator 112 to calculate a predetermined task because the calculation result of the first calculator 111 may be necessary when the second calculator 112 calculates the predetermined task.

The buffer 130 may store the calculation result of the first calculator 111 or the second calculator 112 of which the calculation of the job is completed first, and thereby prevent a synchronization overhead for syncing the calculation results of the first calculator 111 and the second calculator 112. Here, the first calculator 111 or the second calculator 112 of which the calculation is completed later may calculate a job, based on the calculation result stored by the buffer 130.

The buffer 130 may include a buffer for temporarily storing the calculation result of the first calculator 111 or the second calculator 112 of which the calculation is completed. Also, the buffer 130 may include a memory corresponding to the plurality of calculators 110. Here, the memory may store data to be used in the corresponding plurality of calculators 110 and the calculation result.

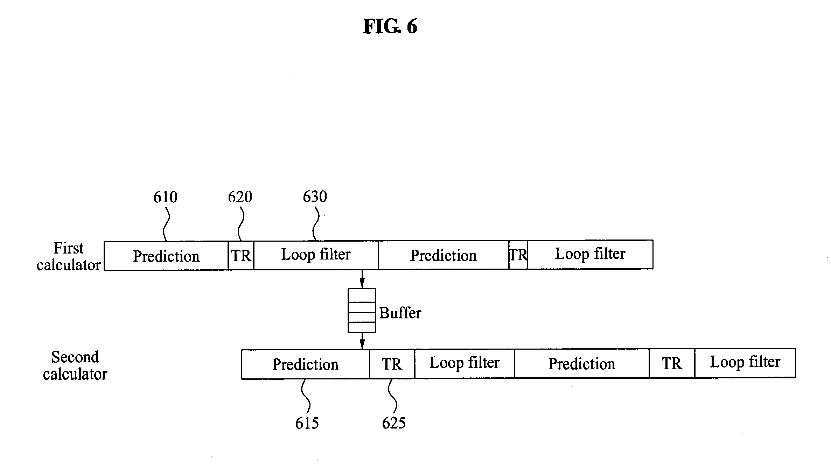

An operation of the buffer 130 will be described in detail with reference to FIG. 6.

When data for video decoding exists externally, at least one of the plurality of calculators 110 may receive external data for calculation from an external data transmitter. Here, a calculator receiving external data may have a different period of time for performing a task from a calculator not receiving external data because the calculator receiving the external data may need to delay calculation of a relevant task for a period of time corresponding to a period of time for receiving the external data.

Accordingly, the synchronization overhead may occur for a synchronization between the calculator receiving the external data and the calculator not receiving the external data.

As a result, when the first calculator 111 or the second calculator 112 needs to receive the external data for calculation from the external data transmitter, the buffer 130 may store the calculation result of the calculator not receiving the external data, and thereby preventing the synchronization overhead. The buffer 130 may provide the stored calculation result to the calculator receiving the external data.

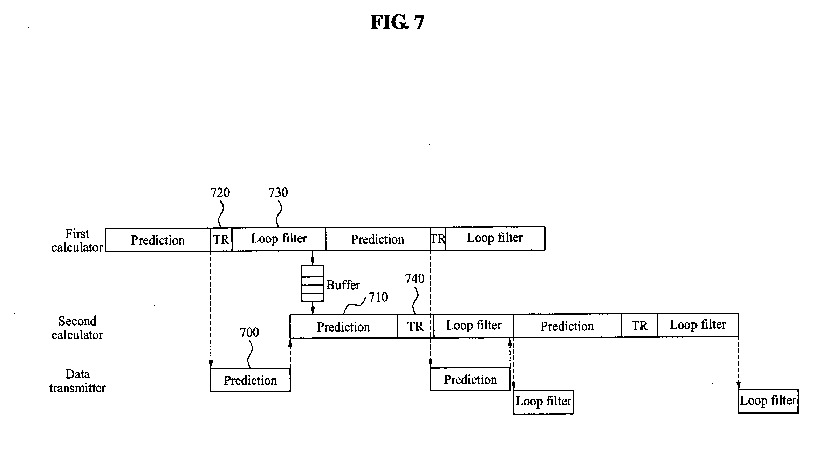

Operation of the buffer 130 for a case in which the calculator needs to receive the external data will be described in detail with reference to FIG. 7.

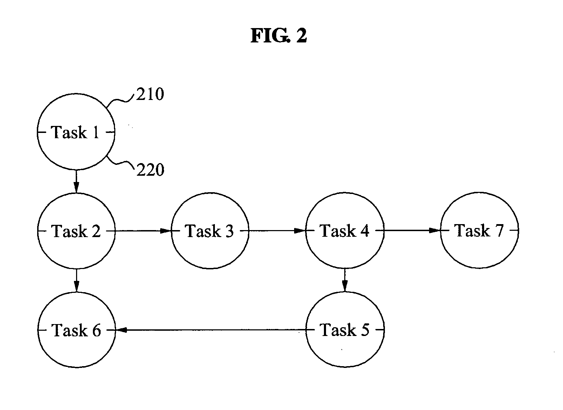

FIG. 2 illustrates an example of tasks into which a job is classified according to example embodiments.

A process may be configured by a plurality of tasks as shown in FIG. 2. The plurality of tasks may be configured by jobs of scheduling, or controlling of a hardware device, a branch, and a data address for executing a predetermined application, and jobs of performing a plurality of mathematical operations, such as an FFT.

Here, a calculator optimized to a job of which a calculation property is a controlled calculation, such as the scheduling, or controlling of the hardware device, the branch, and the data address for executing the predetermined application may differ from a calculator optimized to a job of which a calculation property is a large volume calculation, including a plurality of mathematical operations, in a configuration or a specification.

For example, when the large volume calculation is requested to the first calculator 111 optimized to the controlled calculation, a calculation speed may be slower than the second calculator 112 optimized to the large volume calculation as well as a general calculator for performing all calculations without being optimized to a predetermined calculation. Conversely, when the controlled calculation is requested to the first calculator 111, the calculation speed may be faster than other calculators.

The first calculator 111 optimized to the controlled calculation and the second calculator 112 optimized to the large volume calculation may perform a more efficient job with fewer resources than the general calculator when calculating a job having the controlled calculation property and a job having a large volume calculation property.

Accordingly, the apparatus 100 for parallel processing execution may classify jobs included in a single task (e.g. task 1 in Figure 2) into a job 210 of which a calculation property is the controlled calculation and a job 220 of which a calculation property is the large volume calculation.

The apparatus 100 for parallel processing execution may distribute the job 210 to the first calculator 111, and distribute the job 220 to the second calculator 111, such that the first calculator 111 calculates the job 210 and the second calculator 111 calculates the job 220.

Here, the first calculator 111 and the second calculator 112 may perform a more efficient job with fewer resources than the general calculator when the first calculator 111 and the second calculator 112 calculate the job 210 having the controlled calculation property and the job 220 having the large volume calculation property, respectively. Accordingly, the apparatus 100 for parallel processing execution may enhance a calculation speed based on an increase of a number of calculators while preventing an increase of resources.

FIG. 3 illustrates an example of a process in which a plurality of calculators 110 calculates a job based on a task unit according to example embodiments.

Scheduling may be needed when the plurality of calculators 110 performs calculation of a job in parallel because the distributor 120 of the apparatus 100 for parallel processing execution may map a single task to the plurality of calculators 110 based on a calculation property.

More particularly, the distributor 120 may distribute, to the first calculator 111, jobs 310 of which the calculation property is a controlled calculation, and distribute, to the second calculator 112, jobs 320 of which a calculation property is a large volume calculation from among jobs configuring a plurality of tasks.

Here, the distributor 120 may enable the second calculator 112 to perform a calculation of a predetermined task subsequent to the first calculator 111 completing a calculation of a predetermined task, and the first calculator 111 may schedule an order of performing jobs in order to perform a calculation of a subsequent task.

For example, the first calculator 111 may perform a calculation of the job 310 of which a calculation property is a controlled calculation, from among jobs configuring task 1 of FIG. 3.

The second calculator 112 may perform a calculation of the jobs 320 of which a calculation property is a large volume calculation from among the jobs configuring task 1, using the calculation result of the first calculator 111 when the first calculator 111 completes a calculation. In this instance, the first calculator 111 may perform a calculation of jobs of which a calculation property is a controlled calculation from among jobs configuring task 2.

In particular, a period of time during which the first calculator 111 and the second calculator 112 calculate a task may be reduced because the first calculator 111 and the second calculator 112 calculate only a portion of the jobs configuring a plurality of tasks, respectively. Also, the first calculator 111 and the second calculator 112 may perform a calculation more rapidly than a universal calculator for performing all calculations because the first calculator 111 and the second calculator 112 are optimized to the respective calculation properties. Alternatively, the first calculator 111 and the second calculator 112 having a lower specification than the universal calculator may calculate a job at a speed similar to a speed of the universal calculator.

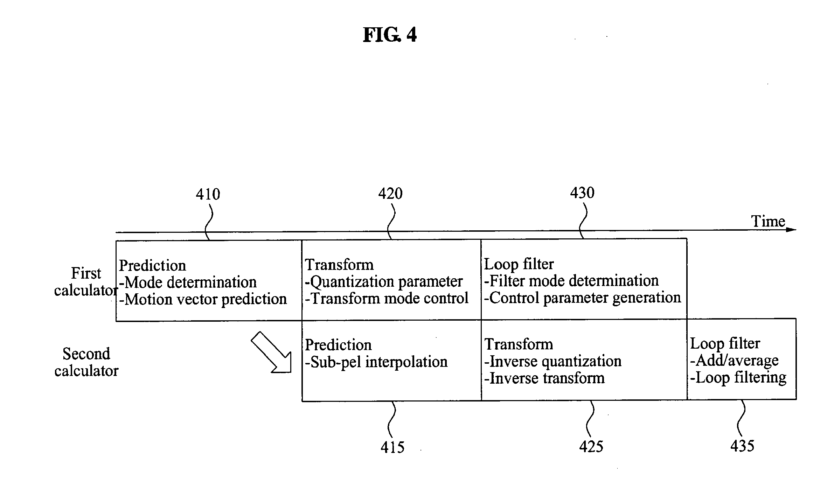

FIG. 4 illustrates an example of distributing a job in which a distributor configures a task of a video decoder according to example embodiments.

The video decoder may include three tasks, for example, a prediction, a transform, and a loop filter as shown in FIG. 4.

Here, in the prediction task, the distributor 120 may distribute a mode determination job and a motion vector prediction job to the first calculator 111, and distribute a sub-pel interpolation job to the second calculator 112, based on a calculation property.

Also, in the transform task, the distributor 120 may distribute a quantization parameter generation job and a transform mode control job to the first calculator 111, and distribute an inverse quantization job and an inverse transform job to the second calculator 112, based on a calculation property.

In the loop filter task, the distributor 120 may distribute a filter mode determination job and a control parameter generation job to the first calculator 111, and distribute an add/average job and a loop filtering job to the second calculator 112, based on a calculation property.

Here, the jobs distributed to the first calculator 112 may refer to jobs of generating data, an operation mode, and a parameter for a large volume calculation, and the jobs distributed to the second calculator 112 may refer to jobs of performing a large volume calculation using the parameter generated by the first calculator 112.

Accordingly, among jobs configuring the same task the distributor 120 may schedule the jobs distributed to the first calculator 111 to be performed first, and schedule the jobs distributed to the second calculator 112 to be performed using the calculation result of the first calculator 111.

In operation 410, the first calculator 111 may perform a mode determination job and a motion vector prediction job 410 for the prediction.

Here, a calculation result of the motion vector prediction job may indicate location information when the prediction is performed using reference image data. Also, a calculation result of the mode determination job may include determining a method based on a combination of a prediction unit, for example, partitioning in a macro block unit, such as, 16 x 16, 16 x 8, 8 x 16, 8 x 8, uni-directional and bi-directional predictions, and a motion vector location.

In operation 420, the first calculator 111 may transfer the calculation results of operation 410 to the second calculator 112, and perform the quantization parameter generation job and the transform mode control job 420 to perform the transform. Here, the second calculator 112 may perform operation 415.

In operation 415, the second calculator 112 may perform a job of a prediction task, such as, the sub-pel interpolation job, using the calculation results transferred from the first calculator 111.

An efficiency of an entire system may increase because the first calculator 111 and the second calculator 112 perform operations 420 and 415, respectively, and calculate, in parallel, a job configuring the transform task and a job configuring the prediction task.

In operation 430, the first calculator 111 may transfer parameters generated in operation 420 to the second calculator 112, and perform a job for the loop filter. Here, the second calculator 112 may perform operation 425.

In operation 425, the second calculator 112 may perform the inverse quantization job and the inverse transform job, using the calculation results transferred from the first calculator 111.

When the first calculator 111 transfers parameters generated in operation 430 to the second calculator 112, the second calculator 112 may perform operation 435.

In operation 435, the second calculator 112 may perform the add/average job and the loop filtering job, using the calculation results transferred from the first calculator 111.

Here, the distributor 120 may minimize a performance degradation due to a synchronization among the calculators through partitioning a job to minimize an instance in which the calculation result of the second calculator 112 is fedback to the first calculator 111.

FIG. 5 illustrates an example of a process in which a plurality of calculators calculates a job based on a task group unit according to example embodiments.

When the calculation result of the second calculator 112, using the calculation result of the first calculator 111, is fedback to the first calculator 111 due to a presence of a dependency relationship among a plurality of tasks, the first calculator 111 and the second calculator 112 may not calculate a job in parallel.

Accordingly, when the dependency relationship is present among the plurality of tasks, the apparatus 100 for parallel processing execution may group the plurality of tasks based on the dependency relationship, and partition the job for the plurality of calculators 110 to calculate the job based on a grouped task group unit.

Here, the distributor 120 of the apparatus 100 for parallel processing execution may group the plurality of tasks, such that the dependency relationship of the calculation result among task groups does not occur.

For example, the distributor 120 may group tasks 1 through 7 into a single task group 500 as shown in FIG. 5.

Here, the first calculator 111 may perform a calculation of jobs 510 of which a calculation property is a controlled calculation first, from among jobs configuring tasks included in the task group 500.

Additionally, the second calculator 112 may perform a calculation of jobs 520 of which a calculation property is a large volume calculation, from among the jobs configuring the tasks included in the task group 500, using the calculation result of the first calculator 111 when the first calculator 111 completes a calculation. Here, the first calculator 111 may perform a calculation of jobs of which the calculation property is the controlled calculation, from among the jobs configuring tasks included in a subsequent task group.

In particular, the apparatus 100 for parallel processing execution may group tasks having a dependency relationship into a single task group, and prevent a calculation result from being fedback, such that the first calculator 111 and the second calculator 112 may calculate a job in parallel.

FIG. 6 illustrates an example of a process in which a plurality of calculators 110 calculates a job using a buffer 130 according to example embodiments.

FIG. 4 illustrates an instance in which the plurality of calculators 110 has an identical period of time, respectively, for performing a calculation of a plurality of tasks configuring a process. However, in reality, a period of time for performing a calculation of a job configuring a task may differ based on a property of a task, a number of jobs distributed to the plurality of calculators 110 in a task, and an amount of calculation required for a job.

FIG. 6 is an example of an operation of minimizing a synchronization overhead, using the buffer 130 when the period of time for performing the calculation of the job configuring the task differs respectively for the plurality of tasks. More particularly, FIG. 6 is an example in which a period of time for performing a calculation of a transform (TR) task 620 is considerably short when compared to a time for performing a calculation of a prediction task 610, and a time for performing a calculation of a loop filter task 630.

Here, the first calculator 111 may complete a calculation of the TR task 620 prior to the second calculator 112 completing the prediction task 615. Here, the second calculator 112 may not receive a calculation result of the TR task 620 to be transferred from the first calculator 111 because the second calculator 112 is performing a calculation for the prediction task 615. Accordingly, a synchronization overhead may occur when the first calculator 111 waits for a subsequent task, for example, a calculation of the loop filter task 630, without performing a calculation until the second calculator 112 receives a calculation result of the TR task 620.

Accordingly, when the second calculator 112 does not complete a calculation of the prediction task 615 at a point in time at which the calculation of the TR task 620 is completed, the first calculator 111 may store a calculation result of the TR task 620 in the buffer 130, and perform the calculation of the loop filter task 630.

Here, the second calculator 112 may perform the calculation of the TR task 625, using the calculation result of the TR task 620 stored in the buffer 130, subsequent to completing the calculation of the prediction task 615.

In particular, the buffer 130 may temporarily store a calculation result of a calculator of which a calculation is completed first, provide the calculation result stored in a calculator completing a calculation subsequently, and minimize the synchronization overhead occurring when the calculator completing the calculation first waits for a calculation of another calculator to be completed.

FIG. 7 illustrates an example of a process in which a plurality of calculators 110 calculates a job through receiving external data according to example embodiments.

When data for video decoding exists externally, at least one of the plurality of calculators 110 may receive external data for calculation from an external data transmitter.

Here, a calculator receiving external data may have a different period of time for performing a task from a calculator not receiving external data because the calculator receiving the external data may need to delay a calculation of a relevant task for a period of time corresponding to a period of time for receiving the external data.

FIG. 7 is an example of an operation in which a synchronization overhead is minimized using a buffer when external data 700 is received. More particularly, FIG. 7 illustrates that the second calculator 112 receives the external data 700 from a data transmitter, and transmits a calculation result of a loop filter task to the data transmitter when the second calculator 112 performs a calculation of a prediction task 710.

In this instance, the second calculator 112 may receive external data 700 for performing the prediction task 710 from the data transmitter, and calculate the prediction task 710 using the external data 700. Here, the external data 700 may be determined based on a calculation result of the prediction task 710 calculated by the first calculator 111.

Here, the first calculator 111 is likely to complete the calculation of a TR task 720 prior to the second calculator 112 completing the calculation of the prediction task 710 because the second calculator 112 calculates the prediction task 710 subsequent to receiving the external data 700. When a period of time for performing the calculation of the TR task 720 is less than a period of time for receiving the external data 700 as shown in FIG. 7, the first calculator 111 may complete the calculation of the TR task 720 prior to the second calculator 112 starting the calculation of the prediction task 710.

Here, the second calculator 112 may not receive the calculation result of the TR task 720 to be transferred from the first calculator 111 because the second calculator 112 does not complete the calculation of the prediction task 700.

Accordingly, the first calculator 111 may store the calculation result of the TR task 720 to the buffer 130, and perform a calculation of a loop filter task 730 when the second calculator 112 does not complete the calculation of the prediction task 720 at a point in time at which the first calculator 111 completes the calculation of the TR task 720.

Here, the second calculator 112 may perform a calculation of a TR task 740 using the calculation result of the TR task 720 stored in the buffer 130, subsequent to completing the calculation of the TR task 710.

FIG. 8 illustrates an example of a process in which a plurality of calculators calculates a job based on a block or pixel unit of an image according to example embodiments.

A dependency relationship may exist among image processing applications including a video application in a predetermined block or pixel unit.

In particular, FIG. 8 illustrates an instance in which a dependency relationship exists among blocks disposed on a left, a top-left, and a top of a predetermined block. More particularly, a (nK + 3)th block 800 may have a dependency relationship with a (nK + 2)th block 803, a ((n - 1)K + 2)th block 801, and a ((n - 2)K + 3)th block 802. Here, a current block may perform a calculation using a result of a predetermined calculation of a block having the dependency relationship with the current block. Therefore, the calculation of the current block may be performed when the predetermined calculation of the block having the dependency relationship with the current block is completed.

For example, the distributor 120 may distribute a calculation of an intra prediction task to the first calculator 111, and an intra prediction task may calculate a calculation result of a loop filter task calculated by the second calculator 112 through receiving a feedback of the calculation result of the loop filter task. Here, the second calculator 112 may need to complete the calculation of the loop filter task of the (nK + 2)th block in order for the first calculator 111 to calculate an intra prediction task of the (nK + 3)th block.

In particular, when the second calculator 112 calculates the loop filter task of the (nK + 2)th block, the first calculator 111 may not calculate the intra prediction task of the (nK + 3)th block in parallel.

Accordingly, the distributor 120 may perform a parallelization of the first calculator 111 and the second calculator 112 through calculating a pipeline on a block.

More particularly, the distributor 120 may distribute a controlled calculation 810 of a (nK + m)th block to the first calculator 111, and distribute a large volume calculation of a (nK + m - 1)th block to the second calculator 112.

The distributor 120 may distribute a controlled calculation 811 of a (nK + m + 1)th block to the first calculator 111, and distribute a large volume calculation 820 of a (nK + m)th block to the second calculator 112. Here, the first calculator 111 may perform the controlled calculation 811 of the (nK + m + 1)th block, using a calculation result of the large volume calculation of a (nk + m -1)th block.

The distributor 120 may distribute the controlled calculation of the (nK + m + 2)th block to the first calculator 111, and distribute a large volume calculation 821 of the (nK + m + 1)th block to the second calculator 112. Here, the first calculator 111 may perform the controlled calculation of the (nK + m + 2)th block, using the calculation result of the large volume calculation 821 of the (nK + m)th block.

In particular, the distributor 120 may parallel process image processing applications through grouping calculations of blocks having a dependency relationship with the current block 800, and distributing the calculations of the blocks to the first calculator 111 and the second calculator 112.

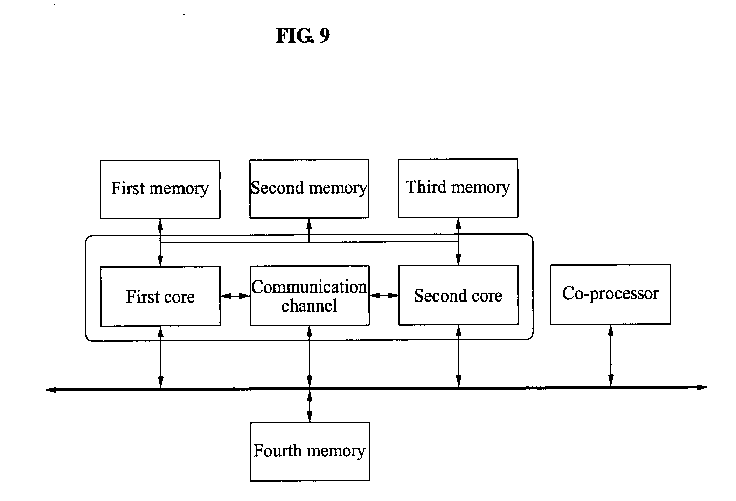

FIG. 9 illustrates an example of an apparatus for parallel processing execution according to example embodiments.

In particular, FIG. 9 illustrates an example of the apparatus for parallel processing execution configured by two cores, a communication channel, and a plurality of memories. Here, a first core may include the first calculator 111 and the distributor 120, and a second core may include the second calculator 112 and the distributor 120. Also, a co-processor may refer to a third calculator to be set as a slave calculator of the first calculator 111 or the second calculator 112.

Here, the first core and the second core may receive data and a parameter required for a plurality of operations of the first core and the second core, respectively, using the communication channel. Also, a first memory may be used for storing data used in the first core and a calculation result of the first core, and a second memory and a third memory may store data used in the second core and a calculation result of the second core. A portion of the first memory, the second memory, the third memory, and a fourth memory may be shared by the first core and the second core. Here, the distributor 120 included in the first core and the distributor 120 included in the second core may partition a task using the same setting, and match a job distributed to the first calculator 111 by the distributor 120 included in the first core to a job distributed to the first calculator 111 by the distributor 120 included in the second core.

The first calculator 111 of the first core may calculate the job distributed by the distributor 120, and transmit a calculation result to the second core using the communication channel. More particularly, the first calculator 111 of the first core may select information required for the job distributed to the second core from among calculation results, and transmit the required information to the second core. Here, the required information may include a relevant parameter, data, and a memory address including the data.

The first calculator 111 of the first core may calculate a subsequent job without waiting for the calculation result of the second core. Here, the second calculator 112 of the second core may perform a calculation using the required information transferred from the first core, and wait for the information transferred from the first core.

When the calculation result of the second core needs to be fedback to the first core, the second calculator 112 of the second core may transmit the calculation result to the first core via the communication channel.

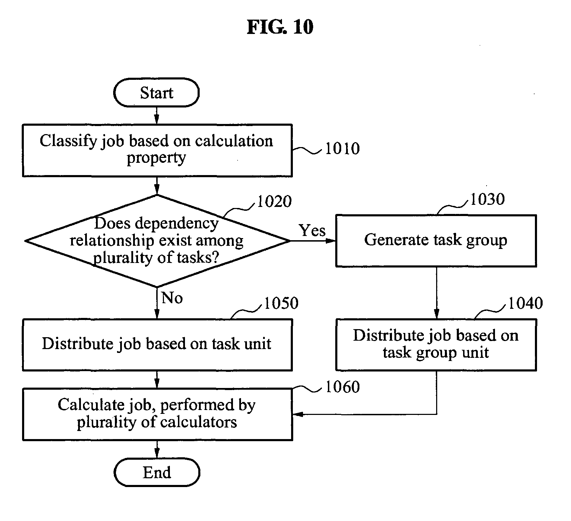

FIG. 10 illustrates a method of parallel processing execution according to example embodiments.

In operation 1010, the distributor 120 may classify a job configuring a plurality of tasks of a process based on a calculation property. Here, the distributor 120 may map the classified job to the first calculator 111 and the second calculator 112. More particularly, the distributor 120 may map the classified job to the first calculator 111 when the calculation property of the job is a controlled calculation, and map the classified job to the second calculator 112 when the calculation property is a large volume calculation.

Also, the distributor 120 may partition a task into a plurality of jobs based on a data flow, and distribute the plurality of jobs partitioned, to the first calculator 111 or the second calculator 112, such that a feedback may not occur among the plurality of jobs partitioned.

In operation 1020, the distributor 120 may verify whether a dependency relationship exists among the plurality of tasks. When the dependency relationship is determined to exist among the plurality of tasks, the distributor 120 may generate a task group by performing operation 1030. Also, when the dependency relationship does not exist, the distributor 120 may perform operation 1050.

In operation 1030, the distributor 120 may generate the task group based on the dependency relationship. More particularly, the distributor 120 may group the plurality of tasks, such that the dependency relationship of the calculation result does not occur among task groups.

In operation 1040, the distributor 120 may distribute a mapped job to the first calculator 111 and the second calculator 112 in operation 1010, such that the plurality of calculators 110 calculates based on a task group unit.

In operation 1050, the distributor 120 may distribute the mapped job to the first calculator 111 and the second calculator 112 in operation 1010, such that the first calculator 111 and the second calculator 112 calculate a job based on a task unit.

In operation 1060, the first calculator 111 and the second calculator 112 may calculate the jobs distributed in operation 1040 or 1050.

Here, the buffer 130 may store the calculation result of the first calculator 111 or the second calculator 112 of which a calculation of a job is completed first, for syncing the calculation results of the first calculator 111 or the second calculator 112. The first calculator 111 or the second calculator 112 of which the calculation is completed later may calculate a job using the calculation result stored by the buffer 130.

When data for video decoding exists externally, at least one of the plurality of calculators 110 may receive external data for calculation from an external data transmitter. Here, the buffer 130 may store a calculation result of a calculator not receiving external data, and when a calculator receiving external data completes a calculation, the buffer 130 may provide the stored calculation result to the calculator receiving the external data and thus, the calculator receiving the external data may calculate a job of a subsequent task.

A portable device as used throughout the present specification includes mobile communication devices, such as a personal digital cellular (PDC) phone, a personal communication service (PCS) phone, a personal handy-phone system (PHS) phone, a Code Division Multiple Access (CDMA)-2000 (1 X, 3X) phone, a Wideband CDMA phone, a dual band/dual mode phone, a Global System for Mobile Communications (GSM) phone, a mobile broadband system (MBS) phone, a satellite/terrestrial Digital Multimedia Broadcasting (DMB) phone, a Smart phone, a cellular phone, a personal digital assistant (PDA), an MP3 player, a portable media player (PMP), an automotive navigation system (for example, a global positioning system), and the like. Also, the portable device as used throughout the present specification includes a digital camera, a plasma display panel, and the like.

The method of parallel processing execution according to the above-described embodiments may be recorded in non-transitory computer-readable media including program instructions (computer readable instructions) to implement various operations embodied by a computer to cause one or more processors to execute or perform the program instructions. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

Although embodiments have been shown and described, it would be appreciated by those skilled in the art that changes may be made in these embodiments without departing from the scope defined by the claims.

## Claims

1. An apparatus for parallel processing execution, the apparatus comprising:
a plurality of calculators, using at least one processor, to calculate a job for configuring a plurality of tasks of a process; and
a distributor to distribute the job to the plurality of calculators, based on a calculation property of the job;
wherein the plurality of calculators includes a first calculator configured to process the job through a controlled calculation and a second calculator configured to process the job through a large volume calculation.

2. The apparatus of claim 1, wherein the distributor classifies the job based on the calculation property, and maps the classified job to the first calculator or the second calculator.

3. The apparatus of claim 1 or 2, wherein:
the controlled calculation includes scheduling or the controlled calculation includes controlling of a hardware device, a branch, and a data address for executing a predetermined application, and
the large volume calculation includes a plurality of mathematical operations.

4. The apparatus of one of claims 1 to 3, wherein the distributor distributes the job to the first calculator or the second calculator for respective calculation results of the first calculator and the second calculator to be provided to one another.

5. The apparatus of one of claims 1 to 4, further comprising:
a buffer to store calculation results of the first calculator and the second calculator of which a calculation of the job is completed in advance to sync the calculation results of the first calculator and the second calculator.

6. The apparatus of one of claims 1 to 5, wherein the distributor distributes the job for the first calculator and the second calculator to process the job based on a task unit when a dependency relationship is absent between the plurality of tasks, or
wherein the distributor distributes the job for the first calculator and the second calculator to process the job based on a task group unit grouped based on a dependency relationship when the dependency relationship is present between the plurality of tasks.

7. The apparatus of one of claims 1 to 6, wherein the distributor partitions a job based on a data flow in at least one of the first calculator and the second calculator, and distributes the partitioned job to the first calculator or the second calculator, to avoid generation of feedback of the calculations of the first calculator or the calculations of the second calculator.

8. The apparatus of claim 6, wherein;
the controlled calculation includes controlling of a hardware device, a branch, and a data address for executing a predetermined image processing application;
the large volume calculation includes a plurality of mathematical operations; and
the predetermined image processing application includes a dependency relationship in a block unit or a pixel unit of a predetermined size.

9. A method of parallel processing execution, the method comprising:
distributing a job to a plurality of calculators, based on a calculation property of the job configuring a plurality of tasks; and
calculating, using the plurality of calculators, the distributed job,
wherein the plurality of calculators includes a first calculator configured to process the job through a controlled calculation, and a second calculator configured to process the job through a large volume calculation, and
wherein the method is performed using at least one processor.

10. The method of claim 9, wherein the distributing comprises:
classifying the job based on a calculation property, and mapping the classified job to the first calculator or the second calculator.

11. The method of claim 9 or 10, wherein:
the control calculation includes scheduling or the control calculation includes controlling of a hardware device, a branch, and a data address for executing a predetermined application, and
the large volume calculation includes a plurality of mathematical operations.

12. The method of one of claims 9 to 11, wherein the distributing comprises:
distributing the job to the first calculator or the second calculator for respective calculation results of the first calculator and the second calculator to be provided to one another.

13. A non-transitory computer-readable medium comprising computer-readable instructions that control at least one processor to perform parallel processing execution, the instructions comprising the steps of:
distributing jobs to a plurality of calculators, based on a calculation property of each job configuring a plurality of tasks of a process; and
calculating, using the plurality of calculators, the distributed job,
wherein the plurality of calculators includes a first calculator to process jobs distributed to the first calculator through a controlled calculation, and a second calculator to process jobs distributed to the second calculator through a large volume calculation, and
wherein the method is performed using at least one processor.

14. The computer-readable medium of claim 13, wherein the process is a video decoding process, and the configuring of the plurality of tasks includes a prediction task, a transform task, and a loop filter task for the video decoder process.

15. The computer-readable medium of claim 14, wherein, for the prediction task, a mode determination job and a motion vector prediction job are distributed to the first calculator and a sub-pel interpolation job is distributed to the second calculator, or
wherein, for the transform task, a quantization parameter generation job and a transform mode control job are distributed to the first calculator and an inverse quantization job and an inverse transform job are distributed to the second calculator, or
wherein, for the loop filter task, a filter mode determination job and a control parameter generation job are distributed to the first calculator and an add/average job and a loop filtering job are distributed to the second calculator.
